# EUROPÄISCHE PATENTSCHRIFT

(11) **EP 3 077 703 B1**
(45) Veröffentlichungstag und Bekanntmachung des Hinweises auf die Patenterteilung: **13.11.2019**
(21) Anmeldenummer: 14821056.0
(22) Anmeldetag: 28.11.2014
(51) Int. Cl.: F16F 15/34

(54) **AUSGLEICHSMASSE UND DREHMOMENTÜBERTRAGUNGSEINRICHTUNG**
COUNTERBALANCE AND TORQUE TRANSMISSION DEVICE
MASSE D'ÉQUILIBRAGE ET DISPOSITIF DE TRANSMISSION DU COUPLE

(30) Priorität: 06.12.2013 DE 102013225126
(43) Veröffentlichungstag der Anmeldung: 12.10.2016
(73) Patentinhaber: Schaeffler Technologies AG & Co. KG, 91074 Herzogenaurach (DE)
(72) Erfinder: LIETZENMAIER, Holger, 77886 Lauf (DE)
(86) Internationale Anmeldenummer: PCT/DE2014/200668
(87) Internationale Veröffentlichungsnummer: WO 2015/081952

(56) Entgegenhaltungen:
- DE-A1-102009 007 829
- DE-A1-102013 208 456

## Beschreibung

Die Erfindung betrifft eine Ausgleichsmasse zum Auswuchten eines um eine Drehachse drehbaren Bauteils, insbesondere eines Bauteils einer Drehmomentübertragungseinrichtung, wie Reibungskupplungseinrichtung, die Ausgleichsmasse aufweisend eine Längsachse und einen Schaftabschnitt. Außerdem betrifft die Erfindung eine Drehmomentübertragungseinrichtung, insbesondere für einen Antriebsstrang eines Kraftfahrzeugs, aufweisend eine Drehachse und wenigstens ein um die Drehachse drehbares Bauteil.

Aus der DE 10 2009 007 829 A1, die den nächstliegenden Stand der Technik bildet, ist eine Reibungskupplung bekannt mit wenigstens einem Kupplungsgehäuse, zumindest einer mit diesem drehfest, jedoch begrenzt axial verlagerbar verbundenen Anpressplatte sowie zwischen dem Kupplungsgehäuse und der Anpressplatte wirksamen Betätigungsmitteln zur axialen Kraftbeaufschlagung der Anpressplatte, bei der zum Auswuchten der Reibungskupplung wenigstens ein diese bildendes Bauteil Ausnehmungen aufweist, in welche als Wuchtgewicht dienende Schraubenelemente einschraubbar sind. Gemäß der DE 10 2009 007 829 A1 besitzen die Schraubenelemente einen Gewindebereich und einen als Wuchtmasse ausgebildeten Kopf. Die Wuchtelemente besitzen Angriffsbereiche für ein Montagewerkzeug, um die Wuchtelemente in die Ausnehmungen einzubringen. Die Schraubenelemente bilden selbstfurchende bzw. selbstschneidende Schrauben, welche den Einsatz von glatten Ausnehmungen ermöglichen.

Aus der deutschen Patentanmeldung mit dem Aktenzeichen 10 2013 208 669.5 ist eine zylinderförmige Ausgleichsmasse bekannt zum Auswuchten eines um eine Drehachse drehbaren Bauteils, insbesondere eines Bauteils einer Drehmomentübertragungseinrichtung, wie Reibungskupplungseinrichtung, aufweisend eine Längsachse, einen ersten Längsabschnitt mit einem ersten Ende und einen zweiten Längsabschnitt mit einem zweiten Ende, bei der das erste Ende in axialer Richtung mit einer Schließkraft beaufschlagbar und der zweite Längsabschnitt zur Herstellung einer formschlüssigen Verbindung plastisch umformbar ist.

Der Erfindung liegt die Aufgabe zugrunde, eine eingangs genannte Ausgleichsmasse baulich und/oder funktional zu verbessern. Insbesondere soll ein sicherer Halt der Ausgleichsmasse an dem Bauteil auch unter Vibrationen gewährleistet sein. Insbesondere soll ein unbeabsichtigtes Lösen der Ausgleichsmasse unter Vibrationen verhindert sein. Insbesondere soll die Ausgleichsmasse mit ihrem Masseschwerpunkt innerhalb des Bauteils sicher fixierbar sein. Insbesondere soll die Ausgleichsmasse mit dem Bauteil mit einem Reibschluss mit erhöhter Robustheit verbindbar sein. Insbesondere soll eine Belastung einer reibschlüssigen Verbindung reduziert sein. Insbesondere soll eine reibschlüssige Verbindung mithilfe einer formschlüssigen Verbindung unterstützbar sein. Außerdem soll eine Drehmomentübertragungseinrichtung mit wenigstens einer derartigen Ausgleichsmasse bereitgestellt werden.

Die Lösung der Aufgabe erfolgt mit einer Ausgleichsmasse zum Auswuchten eines um eine Drehachse drehbaren Bauteils, insbesondere eines Bauteils einer Drehmomentübertragungseinrichtung, wie Reibungskupplungseinrichtung, die Ausgleichsmasse aufweisend eine Längsachse und einen Schaftabschnitt, wobei der Schaftabschnitt ein Rändel mit zur Längsachse geneigten Riefen aufweist.

Das Bauteil kann ein Mitnehmerring sein. Das Bauteil kann ein Gehäuse, ein Zuganker, ein Deckel, ein Drucktopf, eine Hebelfeder oder eine Zentralplatte sein.

Die Ausgleichsmasse kann eine zylinderartige Form aufweisen. Die Ausgleichsmasse kann eine bolzenartige Form aufweisen. Die Ausgleichsmasse kann eine stufenbolzenartige Form aufweisen. Die Ausgleichsmasse kann einen Kopfabschnitt aufweisen. Die Ausgleichsmasse kann eine axiale Anlagefläche aufweisen. Die axiale Anlagefläche kann an mit dem Kopfabschnitt gebildet sein. Die axiale Anlagefläche kann zu dem Schaftabschnitt hin gerichtet sein. Die Ausgleichsmasse kann einen Fußabschnitt aufweisen. Die Ausgleichsmasse kann an dem Kopfabschnitt einen größeren Durchmesser als an dem Schaftabschnitt aufweisen. Die Ausgleichsmasse kann an dem Fußabschnitt einen kleineren Durchmesser als an dem Schaftabschnitt aufweisen. Die Ausgleichsmasse kann endseitig gefast ausgeführt sein.

Die Riefen können an dem Schaftabschnitt in Umfangsrichtung verteilt angeordnet sein. Die Riefen können zur Längsachse nicht-parallel sein. Die Riefen können zum Verstärken einer reibschlüssigen Verbindung der Ausgleichsmasse mit dem Bauteil dienen. Die Riefen können leicht schraubenförmig ausgeführt sein. Die Riefen können gegenüber der Längsachse um ca. 3° bis ca. 15°, insbesondere um ca. 6° bis ca. 12°, insbesondere um ca. 9°, geneigt sein. Die Riefen können in Umfangsrichtung des Schaftabschnitts geneigt sein.

Erfindungsgemäß sind die Riefen mit einer derart hohen Steigung um die Längsachse gewunden, dass der Schaftabschnitt von jeder Riefe nur teilweise umschlungen ist. Die Riefen können eine derartige Steigung aufweisen, dass bei einer Montage eine rein axiale Kraftbeaufschlagung der Ausgleichsmasse ein Drehen der Ausgleichsmasse bewirkt. Die Riefen können jeweils Flanken mit einem Flankenwinkel von ca. 40° bis ca. 80°, insbesondere von ca. 50° bis ca. 70°, insbesondere von ca. 60°, aufweisen. Die Riefen können jeweils eine Tiefe von 6% bis 10%, insbesondere von ca. 7% bis ca. 9%, insbesondere von ca. 8%, eines Außendurchmessers des Schaftabschnitts aufweisen. Die Ausgleichsmasse kann einen Masseschwerpunkt aufweisen, der im Bereich des Schaftabschnitts angeordnet ist. Die Ausgleichsmasse kann an dem Bauteil reib- und formschlüssig festlegbar sein.

Außerdem wird die der Erfindung zugrundeliegende Aufgabe gelöst mit einer Drehmomentübertragungseinrichtung, insbesondere für einen Antriebsstrang eines Kraftfahrzeugs, aufweisend eine Drehachse und wenigstens ein um die Drehachse drehbares Bauteil, bei der an dem Bauteil zum Auswuchten wenigstens eine derartige Ausgleichsmasse angeordnet ist.

Die Drehmomentübertragungseinrichtung kann insbesondere zur Anordnung in einem Antriebsstrang eines brennkraftmaschinengetriebenen Kraftfahrzeugs dienen. Die Drehmomentübertragungseinrichtung kann eine Reibungskupplungseinrichtung sein. Die Reibungskupplungseinrichtung kann wenigstens eine Reibungskupplung aufweisen. Die Reibungskupplungseinrichtung kann eine einzige Reibungskupplung aufweisen. Die Reibungskupplungseinrichtung kann eine Einfachkupplung aufweisen. Die Reibungskupplungseinrichtung kann zwei Reibungskupplungen aufweisen. Die Reibungskupplungseinrichtung kann eine Doppelkupplung aufweisen. Die Drehmomentübertragungseinrichtung kann wenigstens eine Druckplatte aufweisen. Die Drehmomentübertragungseinrichtung kann wenigstens eine Anpressplatte aufweisen. Die Drehmomentübertragungseinrichtung kann ein Gehäuse aufweisen. Das Gehäuse kann einen Deckel aufweisen. Das Gehäuse kann einen Drucktopf aufweisen. Die wenigstens eine Anpressplatte kann zu einer Betätigung zwischen einer eingerückten Betätigungsstellung und einer ausgerückten Betätigungsstellung relativ zu der wenigstens einen Druckplatte in axialer Richtung verlagerbar sein.

Die Reibungskupplungseinrichtung kann in dem Antriebsstrang zwischen einer Brennkraftmaschine und einem Getriebe anordenbar sein. Die Reibungskupplungseinrichtung kann ein Kupplungseingangsteil aufweisen. Das Kupplungseingangsteil kann mit einer Ausgangswelle der Brennkraftmaschine antriebsverbindbar sein. Die Reibungskupplungseinrichtung kann wenigstens ein Kupplungsausgangsteil aufweisen. Die Reibungskupplungseinrichtung kann ein einziges Kupplungsausgangsteil aufweisen. Die Reibungskupplungseinrichtung kann ein erstes Kupplungsausgangsteil und ein zweites Kupplungsausgangsteil aufweisen. Das wenigstens eine Kupplungsausgangsteil kann mit einer Eingangswelle des Getriebes antriebsverbindbar sein.

Die wenigstens eine Ausgleichsmasse kann zum Auswuchten der Drehmomentübertragungseinrichtung dienen. Es können mehrere Ausgleichsmassen in Umfangsrichtung verteilt angeordnet sein. Die Ausgleichsmasse kann eine vorbestimmte Masse aufweisen. Die wenigstens eine Ausgleichsmasse kann an einer vorbestimmten radialen Position angeordnet sein. Die wenigstens eine Ausgleichsmasse kann in Umfangsrichtung an einer vorbestimmten Position angeordnet sein.

Eine Reibungskupplung kann ausgehend von einer vollständig geöffneten Betätigungsstellung, in der zwischen dem Kupplungseingangsteil und einem Kupplungsausgangsteil im Wesentlichen keine mechanische Leistungsübertragung erfolgt, bis hin zu einer vollständig geschlossenen Betätigungsstellung, in der zwischen dem Kupplungseingangsteil und einem Kupplungsausgangsteil im Wesentlichen eine vollständige Leistungsübertragung erfolgt, betätigungsabhängig eine zunehmende Leistungsübertragung ermöglichen, wobei eine Leistungsübertragung zwischen dem Kupplungseingangsteil und einem Kupplungsausgangsteil reibschlüssig erfolgt. Umgekehrt kann ausgehend von einer vollständig geschlossenen Betätigungsstellung, in der zwischen dem Kupplungseingangsteil und einem Kupplungsausgangsteil im Wesentlichen eine vollständige Leistungsübertragung erfolgt, bis hin zu einer vollständig geöffneten Betätigungsstellung, in der zwischen dem Kupplungseingangsteil und einem Kupplungsausgangsteil im Wesentlichen keine Leistungsübertragung erfolgt, betätigungsabhängig eine abnehmende Leistungsübertragung ermöglicht sein. Die Reibungskupplungseinrichtung kann eine mechanische Leistungsübertragung zwischen dem Kupplungseingangsteil einerseits und dem ersten Kupplungsausgangsteil bzw. dem zweiten Kupplungsausgangsteil andererseits in übergehendem Wechsel ermöglichen.

Die Reibungskupplungseinrichtung kann eine Einscheibenkupplung aufweisen. Die Reibungskupplungseinrichtung kann eine Mehrscheibenkupplung aufweisen. Die Reibungskupplungseinrichtung kann eine Trockenkupplung aufweisen. Die Reibungskupplungseinrichtung kann eine Nasskupplung aufweisen. Die Reibungskupplungseinrichtung kann eine gedrückte Kupplung aufweisen. Die Reibungskupplungseinrichtung kann eine gezogene Kupplung aufweisen. Die Reibungskupplungseinrichtung kann mithilfe eines Kupplungspedals betätigbar sein. Die Reibungskupplungseinrichtung kann automatisiert betätigbar sein.

Das Kupplungseingangsteil kann die wenigstens eine Druckplatte, die wenigstens eine Anpressplatte und das Gehäuse aufweisen. Die wenigstens eine Druckplatte und das Gehäuse können miteinander fest verbunden sein. Die wenigstens eine Anpressplatte und das Gehäuse können miteinander drehfest verbunden sein. Das Kupplungsausgangsteil kann wenigstens eine Kupplungsscheibe aufweisen. Die wenigstens eine Kupplungsscheibe kann Reibbeläge aufweisen. Die wenigstens eine Kupplungsscheibe kann zur reibschlüssigen Leistungsübertragung zwischen der wenigstens einen Druckplatte und der wenigstens einen Anpressplatte einklemmbar sein. Die wenigstens eine Druckplatte kann auch als Zentralplatte bezeichnet werden.

Die Reibungskupplungseinrichtung kann eine Betätigungseinrichtung aufweisen. Die Betätigungseinrichtung kann auf die wenigstens eine Anpressplatte wirken. Die Betätigungseinrichtung kann zwischen dem Gehäuse und der wenigstens einen Anpressplatte wirksam sein. Die Betätigungseinrichtung kann sich einerseits an dem Gehäuse und andererseits an der wenigstens einen Anpressplatte abstützen. Die Betätigungseinrichtung kann wenigstens eine Hebelfeder aufweisen. Die Betätigungseinrichtung kann einen Zuganker aufweisen.

Zusammenfassend und mit anderen Worten dargestellt ergibt sich somit durch die Erfindung unter anderem ein reibschlüssiges Wuchtgewicht mit spiralförmigem Rändel. Das Rändel kann schraubenförmig angeordnet sein. Das Rändel kann in einer Spirale um eine Rotationsachse eines Wuchtelements verlaufen. Die Anordnung kann einer Schraube mit sehr hoher Steigung entsprechen, wodurch sich das Wuchtelement während eines Montagevorgangs ohne zusätzlichen drehenden Antrieb selbst drehen kann.

Mit der Erfindung ist ein sicherer Halt der Ausgleichsmasse an dem Bauteil auch unter Vibrationen gewährleistet. Ein unbeabsichtigtes Lösen der Ausgleichsmasse unter Vibrationen ist verhindert. Die Ausgleichsmasse ist mit ihrem Masseschwerpunkt innerhalb des Bauteils sicher fixierbar. Die Ausgleichsmasse ist mit dem Bauteil mit einem Reibschluss mit erhöhter Robustheit verbindbar. Eine Belastung einer reibschlüssigen Verbindung ist reduziert. Eine reibschlüssige Verbindung ist mithilfe einer formschlüssigen Verbindung unterstützbar. Außerdem wird eine Drehmomentübertragungseinrichtung mit wenigstens einer derartigen Ausgleichsmasse bereitgestellt.

Nachfolgend wird ein Ausführungsbeispiel der Erfindung unter Bezugnahme auf Figuren näher beschrieben. Aus dieser Beschreibung ergeben sich weitere Merkmale und Vorteile.

Es zeigen schematisch und beispielhaft:
- Fig. 1: eine Doppelkupplung mit einem Mitnehmerring,
- Fig. 2: einen Mitnehmerring einer Doppelkupplung mit Ausgleichsmassen und
- Fig. 3: eine Ausgleichsmasse zum Auswuchten eines Mitnehmerrings einer Doppelkupplung.

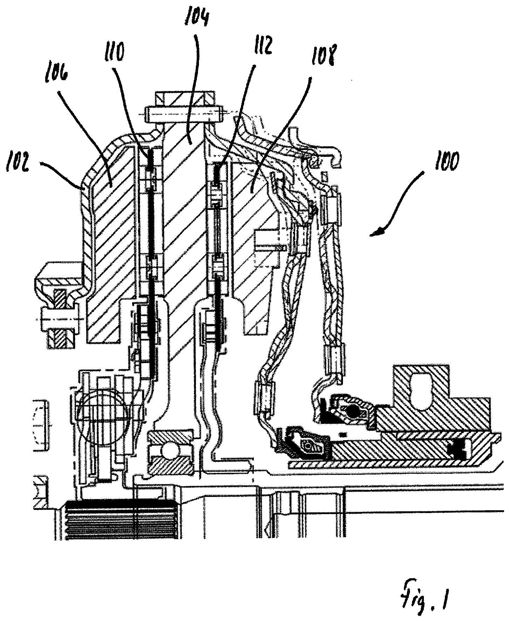

Fig. 1 zeigt eine Doppelkupplung 100 mit einem Mitnehmerring 102. Die Doppelkupplung 100 dient zur Anordnung in einem Antriebsstrang eines Kraftfahrzeugs zwischen einer Brennkraftmaschine und einem Getriebe. Die Doppelkupplung 100 weist ein Eingangsteil, ein erstes Ausgangsteil und ein zweites Ausgangsteil auf. Die Doppelkupplung 100 dient dazu, ein Anfahren sowie einen Wechsel einer Getriebeübersetzung zu ermöglichen. Mithilfe der Doppelkupplung 100 können das Eingangsteil einerseits und das erste Ausgangsteil und/oder das zweite Ausgangsteil andererseits miteinander verbunden oder voneinander getrennt werden. Zudem kann ein Leistungsfluss vom Eingangsteil in übergehendem Wechsel von dem ersten Ausgangsteil auf das zweite Ausgangsteil und umgekehrt verlagert werden. Damit ist ein zugkraftunterbrechungsfreier Antrieb ermöglicht.

Die Doppelkupplung 100 weist eine Druckplatte 104, eine erste Anpressplatte 106 und eine zweite Anpressplatte 108 auf. Der Mitnehmerring 102 und die Druckplatte 104 sind miteinander fest verbunden, vorliegend vernietet. Die erste Anpressplatte 106 und die zweite Anpressplatte 108 sind jeweils mit der Druckplatte 104 drehfest und zu der Druckplatte 104 axial begrenzt verlagerbar verbunden. Die Doppelkupplung 100 weist eine erste Kupplungsscheibe 110 und eine zweite Kupplungsscheibe 112 auf. Die erste Kupplungsscheibe 110 ist zur reibschlüssigen Übertragung einer mechanischen Leistung zwischen der Druckplatte 104 und der ersten Anpressplatte 106 einklemmbar. Die zweite Kupplungsscheibe 112 ist zur reibschlüssigen Übertragung einer mechanischen Leistung zwischen der Druckplatte 104 und der zweiten Anpressplatte 108 einklemmbar.

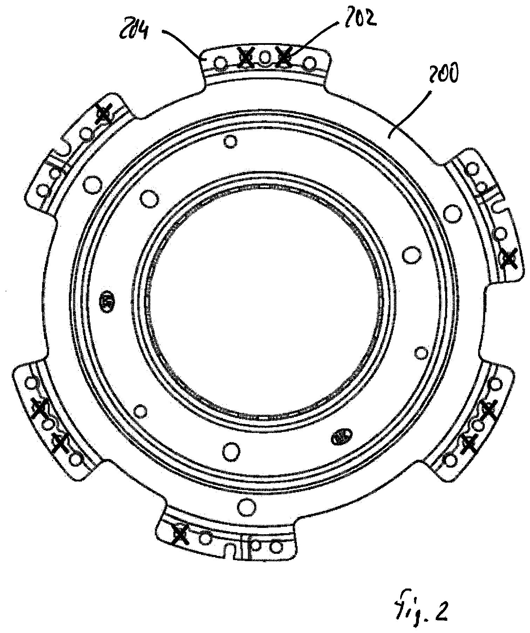

Fig. 2 zeigt einen Mitnehmerring 200, wie Mitnehmerring 102 gemäß Fig. 1, einer Doppelkupplung mit Ausgleichsmassen, wie 202. Der Mitnehmerring 200 weist eine deckelartige Form auf. Der Mitnehmerring 200 weist radial außenseitig laschenartige Fortsätze, wie 204, auf. Mithilfe der Fortsätze 204 ist der Mitnehmerring 200 mit einer Druckplatte verbindbar, insbesondere vernietbar. Die Fortsätze 204 weisen Löcher auf. Die Ausgleichsmassen 202 sind an den Fortsätzen 204 angeordnet. Die Ausgleichsmassen 202 sind in den Löchern angeordnet. Die Ausgleichsmassen 202 dienen zum Auswuchten des Mitnehmerrings 200. Dementsprechend weisen die Ausgleichsmassen 202 jeweils eine angepasste Masse und eine angepasste Anordnung an dem Mitnehmerring 200 auf.

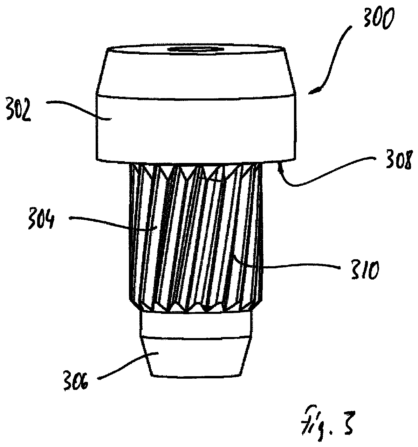

Fig. 3 zeigt eine Ausgleichsmasse 300 zum Auswuchten eines Mitnehmerrings, wie Mitnehmerring 200 gemäß Fig. 2, einer Doppelkupplung. Die Ausgleichsmasse 300 weist eine stufenbolzenartige Form mit einem Kopfabschnitt 302, einem Schaftabschnitt 304 und einem Fußabschnitt 306 auf. Die Ausgleichsmasse 300 weist an ihrem Kopfabschnitt 302 einen größeren Durchmesser als an ihren Schaftabschnitt 304 und an ihrem Fußabschnitt 306 einen kleineren Durchmesser als an dem Schaftabschnitt 304 auf. Die Ausgleichsmasse 300 ist endseitig jeweils gefast ausgeführt. An dem Kopfabschnitt 302 ist eine axiale Anlagefläche 308 zur Anlage an einer Außenseite des Mitnehmerrings gebildet.

Der Schaftabschnitt 304 ist radial außenseitig gerändelt. Der Schaftabschnitt 304 weist radial außenseitig Riefen, wie 310, auf. Die Riefen 310 sind an dem Schaftabschnitt in Umfangsrichtung verteilt angeordnet. Die Riefen 310 sind schraubenförmig in Umfangsrichtung des Schaftabschnitts 304 gegenüber einer Längsachse der Ausgleichsmasse 300 um ca. 9° geneigt. Die Riefen 310 weisen eine derartige Steigung auf, dass der Schaftabschnitt 304 jeweils nicht vollständig umschlungen ist. Die Riefen 310 weisen jeweils Flanken mit einem Flankenwinkel von ca. 60° und eine Tiefe von ca. 8% eines Außendurchmessers des Schaftabschnitts 304 auf.

Zur Montage wird die Ausgleichsmasse 300 mit einer Kraft rein axial beaufschlagt. Die Riefen 310 bewirken dann ein Drehen der Ausgleichsmasse 300, sodass die Ausgleichsmasse 300 schraubenartig montierbar ist, wobei ein Drehantrieb nicht erforderlich ist. Die Riefen 310 dienen allerdings nicht primär einem Formschluss sondern vorrangig zum Verstärken einer reibschlüssigen Verbindung. Bei einem Betrieb der Doppelkupplung werden axial auf die Ausgleichsmasse 300 wirkende Kräfte an den Flanken der Riefen 310 abgestützt.

### Bezugszeichenliste

- 100: Doppelkupplung
- 102: Mitnehmerring
- 104: Druckplatte
- 106: erste Anpressplatte
- 108: zweite Anpressplatte
- 110: erste Kupplungsscheibe
- 112: zweite Kupplungsscheibe

- 200: Mitnehmerring
- 202: Ausgleichsmasse
- 204: Fortsatz

- 300: Ausgleichsmasse
- 302: Kopfabschnitt
- 304: Schaftabschnitt
- 306: Fußabschnitt
- 308: Anlagefläche
- 310: Riefen

## Patentansprüche

1. Ausgleichsmasse (202, 300) zum Auswuchten eines um eine Drehachse drehbaren Bauteils (102, 200), insbesondere eines Bauteils einer Drehmomentübertragungseinrichtung (100), wie Reibungskupplungseinrichtung, die Ausgleichsmasse (202, 300) aufweisend eine Längsachse und einen Schaftabschnitt (304), wobei der Schaftabschnitt (304) ein Rändel mit zur Längsachse geneigten Riefen (310) aufweist, **dadurch gekennzeichnet, dass** die Riefen (310) mit einer derart hohen Steigung um die Längsachse gewunden sind, dass der Schaftabschnitt (304) von jeder Riefe (310) nur teilweise umschlungen ist.

2. Ausgleichsmasse (202, 300) nach Anspruch 1, **dadurch gekennzeichnet, dass** die Riefen (310) gegenüber der Längsachse um ca. 3° bis ca. 15°, insbesondere um ca. 6° bis ca. 12°, insbesondere um ca. 9°, geneigt sind.

3. Ausgleichsmasse (202, 300) nach wenigstens einem der vorhergehenden Ansprüche, **dadurch gekennzeichnet, dass** die Riefen (310) jeweils Flanken mit einem Flankenwinkel von ca. 40° bis ca. 80°, insbesondere von ca. 50° bis ca. 70°, insbesondere von ca. 60°, aufweisen.

4. Ausgleichsmasse (202, 300) nach wenigstens einem der vorhergehenden Ansprüche, **dadurch gekennzeichnet, dass** die Riefen (310) jeweils eine Tiefe von ca. 6% bis 10%, insbesondere von ca. 7% bis ca. 9%, insbesondere von ca. 8%, eines Außendurchmessers des Schaftabschnitts aufweisen.

5. Ausgleichsmasse (202, 300) nach wenigstens einem der vorhergehenden Ansprüche, **dadurch gekennzeichnet, dass** die Ausgleichsmasse (202, 300) einen Masseschwerpunkt aufweist, der im Bereich des Schaftabschnitts (304) angeordnet ist.

6. Ausgleichsmasse (202, 300) nach wenigstens einem der vorhergehenden Ansprüche, **dadurch gekennzeichnet, dass** die Ausgleichsmasse (202, 300) an dem Bauteil (102, 200) reib- und formschlüssig festlegbar ist.

7. Drehmomentübertragungseinrichtung (100), insbesondere für einen Antriebsstrang eines Kraftfahrzeugs, aufweisend eine Drehachse und wenigstens ein um die Drehachse drehbares Bauteil (102, 200), **dadurch gekennzeichnet, dass** an dem Bauteil (102, 200) zum Auswuchten wenigstens eine Ausgleichsmasse (202, 300) nach wenigstens einem der vorhergehenden Ansprüche angeordnet ist.

## Claims

1. Balancing mass (202, 300) for balancing a component (102, 200) which can be rotated about a rotational axis, in particular a component of a torque transmission device (100), such as a friction clutch device, the balancing mass (202, 300) having a longitudinal axis and a shank section (304), the shank section (304) having a knurled portion with grooves (310) which are inclined with respect to the longitudinal axis, **characterized in that** the grooves (310) are wound around the longitudinal axis with a pitch which is so high that the shank section (304) is wrapped around only partially by each groove (310) .

2. Balancing mass (202, 300) according to Claim 1, **characterized in that** the grooves (310) are inclined with respect to the longitudinal axis by from approximately 3° to approximately 15°, in particular by from approximately 6° to approximately 12°, in particular by approximately 9°.

3. Balancing mass (202, 300) according to at least one of the preceding claims, **characterized in that** the grooves (310) in each case have flanks with a flank angle of from approximately 40° to approximately 80°, in particular of from approximately 50° to approximately 70°, in particular of approximately 60°.

4. Balancing mass (202, 300) according to at least one of the preceding claims, **characterized in that** the grooves (310) in each case have a depth of from approximately 6% to 10%, in particular of from approximately 7% to approximately 9%, in particular of approximately 8%, of an external diameter of the shank section.

5. Balancing mass (202, 300) according to at least one of the preceding claims, **characterized in that** the balancing mass (202, 300) has a centroid which is arranged in the region of the shank section (304).

6. Balancing mass (202, 300) according to at least one of the preceding claims, **characterized in that** the balancing mass (202, 300) can be fixed on the component (102, 200) in a frictionally locking and positively locking manner.

7. Torque transmission device (100), in particular for a drive train of a motor vehicle, having a rotational axis and at least one component (102, 200) which can be rotated about the rotational axis, **characterized in that** at least one balancing mass (202, 300) according to at least one of the preceding claims is arranged on the component (102, 200) for balancing purposes.

## Revendications

1. Masse d'équilibrage (202, 300) pour l'équilibrage d'un composant (102, 200) pouvant tourner autour d'un axe de rotation, en particulier d'un composant d'un dispositif de transfert de couple (100) tel qu'un dispositif d'embrayage à friction, la masse d'équilibrage (202, 300) présentant un axe longitudinal et une portion d'arbre (304), la portion d'arbre (304) présentant une molette avec des stries (310) inclinées par rapport à l'axe longitudinal, **caractérisée en ce que** les stries (310) sont enroulées autour de l'axe longitudinal avec un pas suffisamment élevé pour que la portion d'arbre (304) soit seulement entourée partiellement par chaque strie (310).

2. Masse d'équilibrage (202, 300) selon la revendication 1, **caractérisée en ce que** les stries (310) sont inclinées par rapport à l'axe longitudinal d'environ 3° à environ 15°, en particulier d'environ 6° à environ 12°, en particulier d'environ 9°.

3. Masse d'équilibrage (202, 300) selon au moins l'une quelconque des revendications précédentes, **caractérisée en ce que** les stries (310) présentent à chaque fois des flancs avec un angle de flanc d'environ 40° à environ 80°, en particulier d'environ 50° à environ 70°, en particulier d'environ 60°.

4. Masse d'équilibrage (202, 300) selon au moins l'une quelconque des revendications précédentes, **caractérisée en ce que** les stries (310) présentent chacune une profondeur d'environ 6 % à 10 %, en particulier d'environ 7 % à environ 9 %, en particulier d'environ 8 %, d'un diamètre extérieur de la portion d'arbre.

5. Masse d'équilibrage (202, 300) selon au moins l'une quelconque des revendications précédentes, **caractérisée en ce que** la masse d'équilibrage (202, 300) présente un centre de gravité de masse qui est disposé dans la région de la portion d'arbre (304).

6. Masse d'équilibrage (202, 300) selon au moins l'une quelconque des revendications précédentes, **caractérisée en ce que** la masse d'équilibrage (202, 300) peut être fixée par engagement par friction et par correspondance de formes au composant (102, 200).

7. Dispositif de transfert de couple (100), en particulier pour une chaîne cinématique d'un véhicule automobile, présentant un axe de rotation et au moins un composant (102, 200) pouvant tourner autour de l'axe de rotation, **caractérisé en ce qu'**au moins une masse d'équilibrage (202, 300) selon au moins l'une quelconque des revendications précédentes est disposée au niveau du composant (102, 200) pour réaliser l'équilibrage.
